# EUROPÄISCHE PATENTSCHRIFT

(11) **EP 3 022 282 B1**
(45) Veröffentlichungstag und Bekanntmachung des Hinweises auf die Patenterteilung: **21.02.2018**
(21) Anmeldenummer: 14742487.3
(22) Anmeldetag: 17.07.2014
(51) Int. Cl.: C12H 1/07, B01D 61/20, B01D 63/04

(54) **QUERSTROMFILTER FÜR WEIN**
CROSS-FLOW FILTER FOR WINE
FILTRE À ÉCOULEMENT TRANSVERSAL POUR LE VIN

(30) Priorität: 18.07.2013 DE 102013214090
(43) Veröffentlichungstag der Anmeldung: 25.05.2016
(73) Patentinhaber: JOMA Service GmbH, 74560 Böbingen an der rems (DE)
(72) Erfinder: HERB, Matthias, 73061 Ebersbach (DE); MUNZ, Sebastian, 71397 Leutenbach (DE); OECHSLE, Ulrich, 73525 Schwäbisch Gmünd (DE); SCHOOP, Marco, 73635 Rudersberg (DE)
(74) Vertreter: BRP Renaud & Partner mbB Rechtsanwälte Patentanwälte Steuerberater
(86) Internationale Anmeldenummer: PCT/EP2014/065402
(87) Internationale Veröffentlichungsnummer: WO 2015/007848

(56) Entgegenhaltungen:
- WO-A1-00/62908
- WO-A1-2005/058464
- DE-A1- 4 036 978
- JP-A- 2004 136 173
- US-A1- 2002 003 105
- US-A1- 2009 008 341

## Beschreibung

Die Erfindung betrifft ein Querstromfiltrationssystem nach dem Oberbegriff des Anspruchs 1.

In der Fachsprache des Weinbaus werden alle kellerwirtschaftlichen Arbeiten in der Zeitspanne zwischen dem Ende der Gärung und der Abfüllung eines Weins unter dem Oberbegriff des "Ausbaus" zusammengefasst. Der Stand der Technik umfasst dabei unterschiedlichste Verfahren und Vorrichtungen, welche dem Wein eine verbesserte Komplexität oder Struktur verleihen sollen. Derartige Ausbauverfahren schließen in der Regel neben einem ersten Verschnitt und Abstich des Jungweins dessen sorgfältige Filtration ein, die insbesondere der Abscheidung unerwünschter Schwebstoffe dient. Solche Schwebstoffe in Getränken auf pflanzlicher Basis, die im Falle des Weins etwa Kristalle, Proteine, Kolloide, Hefen oder Gerbstoffe aus Fruchtfleisch oder Schale der Weinbeere umfassen, werden in der Lebensmitteltechnologie als Trübungsstoffe, Trubstoffe oder Trub bezeichnet und in einem als "Schönung" bekannten Verfahren ausgefiltert, da sie sich während der Lagerung qualitätsmindernd auswirken. Eine solche Behandlung nach Ende des Herstellungsprozesses kann im Zuge verschiedenster Klärungsverfahren erfolgen.

WO 2013/054966 A1 schlägt zu diesem Zweck ein Filtrationssystem mit einer Vielzahl von Filtereinheiten vor, die neben Funktionen, die in ihrem oberen Bereich konzentriert sind, in ihrem unteren Bereich einen Ausstoßabschnitt zum Ausstoßen von Fremdkörpern nach der Rückspülung mit einem Filter und einer Rückspülleitung umfassen. Entladungsröhren jeder Filtereinheit sind dabei in einer einzelnen Zeile angeordnet. Gemäß WO 2013/054967 A1 weist zudem jede Filtereinheit einen automatischen Reinigungsabschnitt auf, in welchem ein Differenzdruck in mindestens einem bestimmten Bereich in Bezug auf Druck in einem Körper erzeugt wird. Diese Reinigungsabschnitte werden nacheinander unter der Kontrolle eines Steuerabschnitts betätigt. WO 2013/054968 A1 ergänzt die beschriebene Vorrichtung um einen spezifischen Gegendruck-Präventionstank an einer Rückspülungsleitung zur Rückspülung und Abscheidung diverser Fremdstoffe.

Die WO 2005/058464 A1 zeigt einen Aufbau mit mehreren Filtermodulen, die jeweils für für Retentat durchlässig sind. Die Filtermodule teilen sich hierbei einen gemeinsamen Permeatraum.

Aus der DE 40 36 978 A1 ist ein Filtrationssystem mit mehreren Hohlfasermodulen bekannt. Die Hohlfasermodule sind jeweils mit einem Verteiler fluidisch verbunden und vom Verteiler begrenzt, wobei die Verteiler der Holhlfasermodule über gemeinsame Strömungsverteilerplatten mit einer Umwälzpumpe verbunden sind.

Aus der WO 00 / 62 908 A1 ist eine Querstromfiltrationsanlage mit mehreren Querstromfiltrationssystemen bekannt. Das jeweilige System weist vier im Wesentlichen zylindrische Hohlfasermodule auf. An axialen Enden des jeweiligen Systems sind jeweils ein Strömungsteiler und ein Strömungssammler vorgesehen, die bezüglich einer gemeinsamen Längsachse mittig angeordnet sind, wobei die Hohlfasermodule achsparallel und um diese Längsachse angeordnet sind.
In der US 2002 / 0003105 A1 ist ein Querstromfiltrationssystem beschrieben, das vier Hohlfasermodule aufweist. Das System weist ferner einen Strömungsteiler sowie einen Strömungssammler auf, wobei der Strömungsteiler sowie der Strömungssammler mittig auf einer Längsachse angeordnet sind und die Hohlfasermodule sternförmig bzw. konzentrisch um die Längsachse angeordnet sind.

Die US 2009/0008341 A1 zeigt ein Filtrationssystem, das drei zylindrische Filtermodule aufweist. Das System weist ferner an einem axialen Ende einen Strömungsteiler auf. Dem Strömungsteiler gegenüberliegend ist ein Strömungssammler angeordnet, der mit dem Strömungsteiler eine gemeinsame Längsachse hat. US 2002/003105 A1 offenbart ein modulares Fluidbehandlungssystem unter Verwendung von jeder erwünschten Anzahl von Hohlfasermodulen, die sich in der kontrollierten Umgebung einer Reaktionskammer befinden, wobei das System so ausgelegt ist, dass es den Zugang zu einzelnen Fasern innerhalb eines gegebenen Moduls aufnimmt und erleichtert. Die Module, in denen diese Fasern gehalten werden, sind vorzugsweise parallel angeordnet, um ihre Verarbeitungsanwendungen zu optimieren. WO 00/62908 A1 offenbart ein Querstromfiltrationssystem mit mehreren, insbesondere vier zylindrischen Hohlfasermodulen, einem Strömungsteiler und einem Strömungssammler, welche mittig auf einer Längsachse angeordnet sind, und wobei die Hohlfasermodule achsparallel um die Längsachse angeordnet sind. US 2009/008341 A1 offenbart einen Strömungsteiler für ein Filtermembranmodulbündel, der in der Lage ist, Filtermembranmodule im kompaktesten Packungszustand anzuordnen und die Membranfüllungsdichte zu maximieren, da die Intervalle zwischen den Filtermembranmodulen am Nächsten zu einer Miniaturisierung eines Membranseparators gestaltet werden können. Ein Nachteil dieser Vorschläge, die sich auf die Klärung von Ballastwasser auf Schiffen beziehen, liegt in ihrer eingeschränkten Übertragbarkeit auf Anwendungen der Getränkefiltration. Im gegebenen Szenario erweisen sich derartige Ballastwasser-Filter schon aufgrund ihrer Porengröße als weitgehend ungeeignet für Wein.

Eine Aufgabe der Erfindung besteht daher in der Bereitstellung eines zur Qualitätsverbesserung von Weinen in besonderem Maße geeigneten Filtrationssystems. Eine weitere Aufgabe liegt in der Schaffung eines entsprechenden Verfahrens.

Diese Aufgaben werden durch ein Querstromfiltrationssystem mit den Merkmalen des Anspruchs 1 gelöst.

Die Erfindung basiert demnach auf dem Grundgedanken, eine sternförmig um eine Mittelachse des Querstromfiltrationssystems gebildete, gleichsam "polare" Anordnung achsparalleler Filtermodule einzusetzen, welche auf platzsparende Weise eine Abscheidung verschiedenster Trübungsstoffe erlaubt. Neben seinen kompakten Abmessungen und einem entsprechend harmonischen Gesamteindruck ermöglicht ein solchermaßen modular aufgebautes Filtrationssystem eine weitgehend gleichförmige Druckverteilung innerhalb seiner Filtermodule, die zu einem überaus homogenes Strömungsfeld führt.

Jedes Filtermodul umfasst dabei Hunderte beidseitig gegen einen hydraulischen Kurzschluss vergossener ("gepotteter") sogenannter Hohlfäden oder Hohlfasern, deren teildurchlässige Wände als Membran wirken und dem Fachmann dementsprechend auch als Kapillarmembrane geläufig sind. Diese Hohlfasermodule werden einem in der Membrantechnik als Cross-Flow-, Tangential-Flow- oder Querstromfiltration bekannten Verfahren zugrunde gelegt, indem Wein oder eine vergleichbare zu filtrierende Suspension mit hoher Geschwindigkeit durch die Hohlfasermodule gepumpt und das Permeat quer zur Strömungsrichtung abgezogen wird. Die durch die erfindungsgemäße Anordnung besonders gleichmäßige Beschickung des Querstromfiltrationssystems bewirkt dabei einen im Wesentlichen identischen Volumenstrom der Suspension innerhalb sämtlicher Hohlfasermodule mit der Folge, dass sich das von diesen zurückgehaltene Retentat auf den Kapillarmembranen nicht oder nur langsam zu einem sogenannten Filterkuchen akkumulieren kann. Durch die Vermeidung dieser auch als Fouling bezeichneten Deckschichtbildung innerhalb der Hohlfasermodule erlaubt die vorgeschlagene Anordnung somit einen langfristig wirtschaftlichen Betrieb des Querstromfiltrationssystems bei nur geringem Anstieg des der Suspension entgegengesetzten Strömungswiderstands. Auf diese Weise lässt sich die Leistungsaufnahme einer zur Zirkulation der Suspension eingesetzten Umwälzpumpe über längere Zeit weitgehend konstant halten, ohne dass der erzielte Volumenstrom in den Hohlfasermodulen in erheblichem Maße abnähme. Der in der Strömungslehre bekannte Pinch-Effekt der Hohlfasern, durch welchen sich bei andauerndem Pumpbetrieb ein tendenzielles Gleichgewicht der Trübungsstoffe in einer exzentrischen radialen Position der zylindrischen Module einstellen kann, verlangsamt das Fouling zusätzlich. Darüber hinaus ermöglicht die erfindungsgemäße Lösung eine schonende Filtration der Suspension.

Erfindungsgemäß sind die Filtermodule achsparallel um eine Längsachse des Querstromfiltrationssystems angeordnet. Auch hierdurch wird eine möglichst homogene Durchströmung der Filtermodule erreicht. Das
heißt, dass es bei der Durchströmung der Filtermodule keine oder zumindest eine reduzierte Hierarchie zwischen den Filtermodulen gibt. Diese fehlende Hierarchie spiegelt sich insbesondere dadurch aus, dass in den Filtermodulen im Wesentlichen gleiche Volumenströme, Drücke sowie Partikelfrachten vorliegen.

Eine Verbesserung der homogenen Durchströmung wird dadurch erreicht, dass die Filtermodule senkrecht zur Längsachse den gleichen Abstand zur Längsachse aufweisen. Wird die Richtung quer zur Längsachse als radial bezeichnet, so heißt das, dass die Filtermodule bevorzugt radial äquidistant zur Längsachse angeordnet sind.

In bevorzugten Ausführungsformen des Querstromfiltrationssystems wird die erfindungsgemäß angestrebte gleichmäßige Verteilung des Volumenstroms auf sämtliche Hohlfasermodule durch die spezifische Geometrie des endseitig vorgesehenen Strömungsteilers und -sammlers begünstigt, welche auf einem vorzugsweise konischen Rotationskörper, beispielsweise einem geraden Kreiskegel, beruht.

Besonders bevorzugt sind ferner Ausgestaltungen, bei denen die Filtermodule um die Längsachse drehsymmetrisch angeordnet sind. Eine solche Ausgestaltung führt zu einem homogenen Strömungsfeld oder verbessert dieses, wobei das homogene Strömungsfeld eine gleichmäßige Durchströmung aller Filtermodule bedeutet.

Vorteilhaft kommt zur Förderung der Suspension durch das Querstromfiltrationssystem eine solche Umwälzpumpe zum Einsatz, die derart ausgestaltet und/oder im Querstromfiltrationssystem vorgesehen ist, dass sie ein mehrmaliges Durchströmen der Suspension durch die Filtermodule bewirkt. Das heißt, dass die Umwälzpumpe die Suspension durch das Querstromfiltrationssystem bzw. durch die Filtermodule zirkuliert. Die Umwälzpumpe ist also insbesondere als Zirkulationspumpe ausgestaltet. Hierbei wird beim jeweiligen Durchströmen eines solchen Filtermoduls ein Anteil von Retentat aus der Suspension gefiltert. Um den hierdurch aus der Strömung entfallenden Anteil auszugleichen, ist es vorteilhaft vorgehen, neue Suspension in das Querstromfiltrationssystem einzubringen. Hierzu kann eine Fördereinrichtung, insbesondere eine Pumpe, vorgesehen sein. Ferner kann vorgesehen sein, dass die Suspension einige zehn male, insbesondere fünfzig mal, zirkuliert wird, bevor es das Querstromfiltrationssystem als Filtrat verlässt

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: die perspektivische Ansicht eines Filtrationssystems nach einer ersten Ausführungsform,
- Fig. 2: eine Seitenansicht des Filtrationssystems gemäß der ersten Ausführungsform,
- Fig. 3: einen Längsschnitt des Filtrationssystems gemäß der ersten Ausführungsform,
- Fig. 4: eine Draufsicht des Filtrationssystems gemäß der ersten Ausführungsform,
- Fig. 5: den Längsschnitt eines Strömungsteilers des Filtrationssystems gemäß der ersten Ausführungsform,
- Fig. 6: die perspektivische Ansicht eines Filtrationssystems nach einer zweiten Ausführungsform,
- Fig. 7: eine Draufsicht des Filtrationssystems gemäß der zweiten Ausführungsform,
- Fig. 8: einen Längsschnitt des Filtrationssystems gemäß der zweiten Ausführungsform und
- Fig. 9: den Längsschnitt eines Strömungssammlers des Filtrationssystems gemäß der zweiten Ausführungsform.

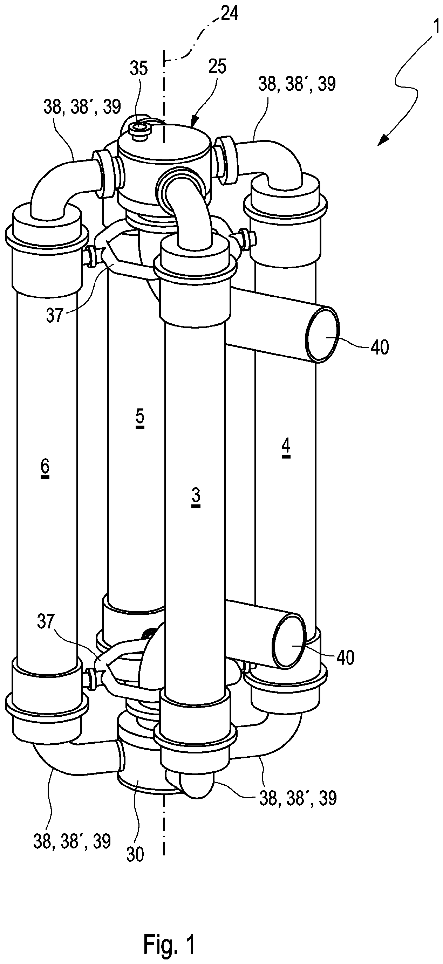

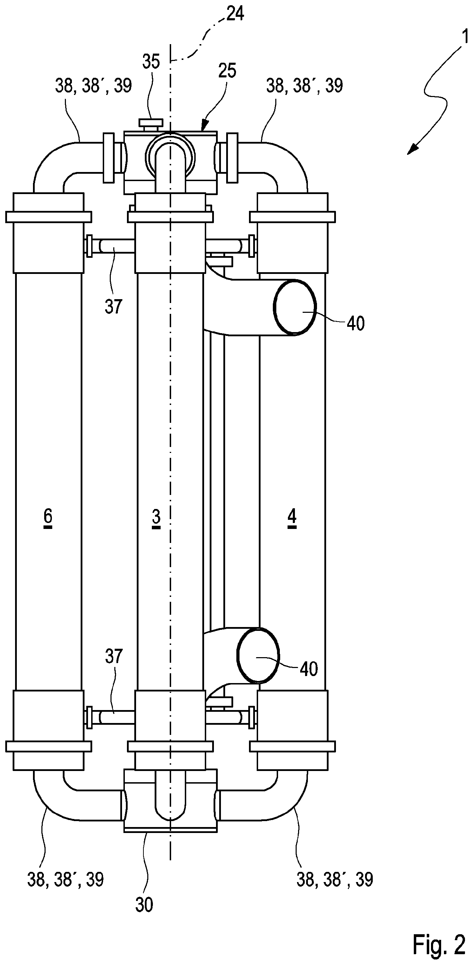

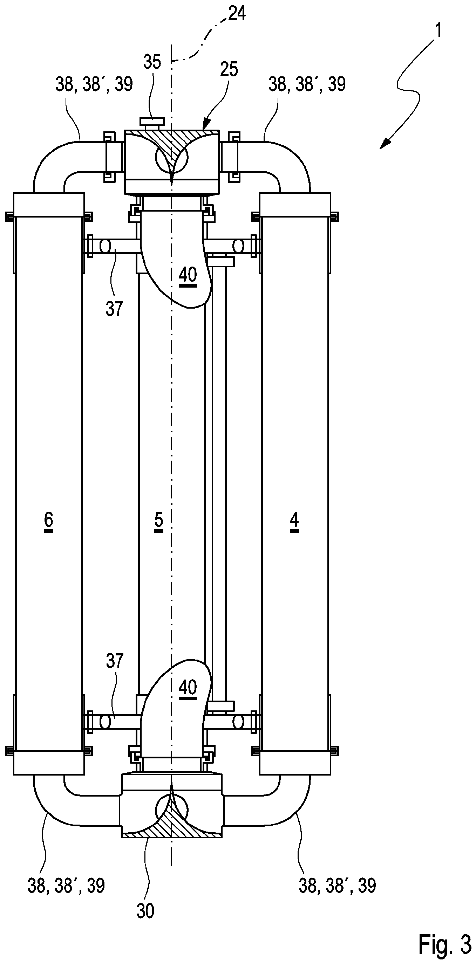

Die Figuren 1 bis 5 illustrieren den Aufbau eines Querstromfiltrationssystems 1 mit vier äquidistant um eine Längsachse 24 oder Längsmittelachse 24 angeordneten im Wesentlichen baugleichen, zylindrischen Hohlfasermodulen 3, 4, 5, 6, deren identische Höhe ihren Durchmesser um ein Vielfaches übersteigt. Der Fachsprache der Membrantechnik entsprechend wird als Hohlfaser dabei im vorliegenden Zusammenhang jegliche näherungsweise zylindrische Faser erachtet, die im Querschnitt einen oder mehrere weitgehend durchgängige Hohlräume aufweist, sodass ihre Wand als Membranfilter zu wirken vermag. Die Hohlfasern der gegebenen Ausführungsform weisen hierzu eine Länge zwischen 2 cm und 2 m, einen Innendurchmesser zwischen 0,1 µm und 3 mm sowie eine Porengröße zwischen 100 nm und 2 µm auf, um unerwünschte Feststoffpartikel des Trubs eines als Suspension vorliegenden Jungweines zuverlässig zurückhalten zu können. Mechanische Trennverfahren unter Einsatz einer Membran der genannten Porengröße sind einschlägigen Fachkreisen unter dem Oberbegriff der Mikrofiltration vertraut.

Als Werkstoffe kommen neben Keramik und Sintermetall insbesondere auf Polyethersulfon (PESU), Polysulfon (PSU), Polyacrylnitril (PAN), Polytetrafluorethylen (PTFE), Polypropylen (PP), Polyethylen (PE), Polyvinylidenfluorid (PVDF) oder anderen Polymeren basierende Fasern in Betracht, welche beispielsweise mittels Phaseninversion im Nassspinnverfahren hergestellt und optional - etwa im Falle von Polytetrafluorethylen, Polypropylen oder Polyethylen - gesintert oder extrudiert und verreckt sind.

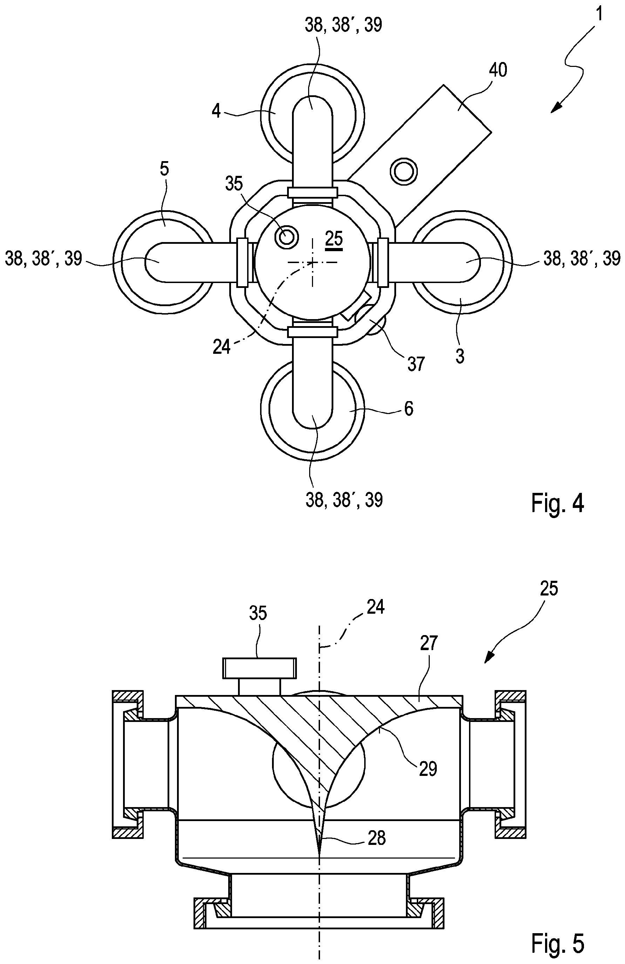

Erfindungsgemäß sind die derart konfigurierten Hohlfasermodule 3, 4, 5, 6, wie insbesondere die Figuren 1 bis 4 erkennen lassen, im Wesentlichen achsparallel angeordnet und bilden in der in Figur 4 gezeigten Draufsicht die Eckpunkte eines Quadrats, dessen Seitenlänge näherungsweise dem Dreifachen des Moduldurchmessers entspricht. Zudem liegen die Hohlfasermodule 3, 4, 5, 6 auf einem Kreis, dessen Mittelpunkt von der Längsachse 24 geschnitten wird, wobei die Hohlfasermodule 3, 4, 5, 6 bezüglich der Längsachse 24 drehsymmetrisch angeordnet sind. Beim hier gezeigten Beispiel aus vier Hohlfasermodulen 3, 4, 5, 6 beträgt der Symmetriewinkel ca. 90°.

In einer der oberen Stirnfläche des Querstromfiltrationssystems 1 entsprechenden Raumebene, welche der Darstellung der Figur 4 zugrunde liegt, ist in gleichmäßigem Abstand von sämtlichen Hohlfiltermodulen 3, 4, 5, 6 ein Strömungsteiler 25 angeordnet, der kraft seiner spezifischen Geometrie und Anordnung eine anteilige Umleitung der das Querstromfiltrationssystems 1 durchströmenden Suspension auf jedes der vier Hohlfiltermodule 3, 4, 5, 6 bewirkt. Den Kern des Strömungsteilers 25, welcher insbesondere der Schnittdarstellung gemäß Figur 5 zu entnehmen ist, bildet dabei ein durch die erste Mantelfläche 29 begrenzter erster Rotationskörper 27, dessen dem Mittelpunkt des Querstromfiltrationssystems 1 zugewandte Seite mittig durch eine - in den Figuren 1 bis 5 nicht gezeigte - Umwälzpumpe angeströmt wird. Die erste Mantelfläche 29 wird in der vorliegenden Ausführungsform durch Rotation einer Exponentialfunktion um eine der Mittelachse des Querstromfiltrationssystems 1 entsprechende Gerade gebildet, in deren Richtung sie sich somit spitz zulaufend wölbt. Eine von der so geformten ersten Spitze 28 fortweisend auf der oberen Grundfläche des ersten Rotationskörpers 27 angeformte Armatur dient schließlich als optionaler Entlüfter 35 zur Entfernung unerwünschten Gases, insbesondere von Luft, welches - bei einer im Vergleich zur Suspension geringeren Dichte - dazu neigt, sich in Gestalt einer Gasblase am höchsten Punkt des Strömungsteilers 25 des Querstromfiltrationssystems 1 zu sammeln.

Ein komplementär zum Strömungsteiler 25 angeordneter und konfigurierter Strömungssammler 30 ist in einer der unteren Stirnfläche des Querstromfiltrationssystems 1 entsprechenden Raumebene ebenfalls in gleichmäßigem Abstand von sämtlichen Hohlfiltermodulen 3, 4, 5, 6 und somit koaxial zum Strömungsteiler 25 vorgesehen. Der Strömungssammler 30 ist also entlang der Längsachse 24 dem Strömungsteiler 25 gegenüberliegend und vom Strömungsteiler 25 beabstandet angeordnet.

Die Hohlfasermodul 3, 4, 5, 6 sind jeweils durch einen Verbindungsabschnitt 38 fluidisch mit dem Strömungsteiler 25 und jeweils durch einen Verbindungsabschnitt 38 fluidisch dem Strömungssammler 30verbunden. Hierbei sind die Verbindungsabschnitte 38 jeweils als ein Verbindungsrohr 38' ausgebildet. Die Verbindungsabschnitte 38 sind als Gleichteile 39 ausgestaltet. Zudem sind die Verbindungsabschnitte 38 mit der gleichen Drehsymmetrie angeordnet wie die Hohlfasermodule 3, 4, 5, 6 angeordnet.

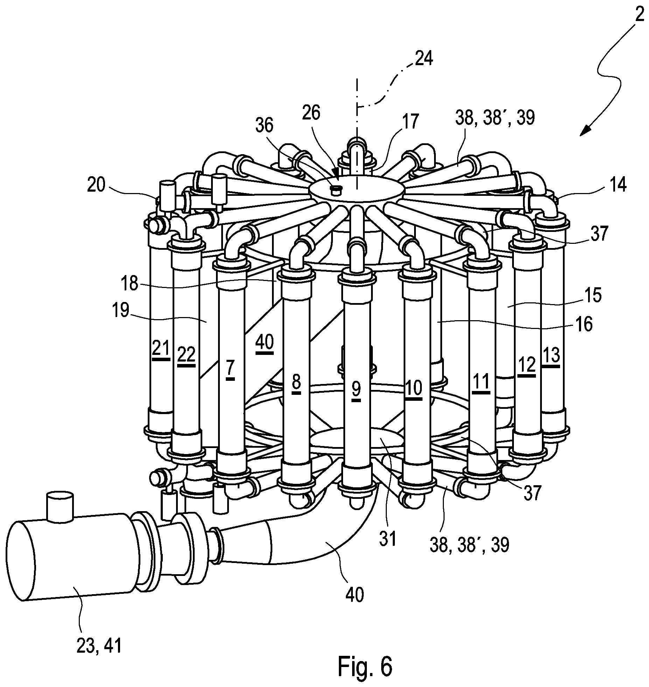

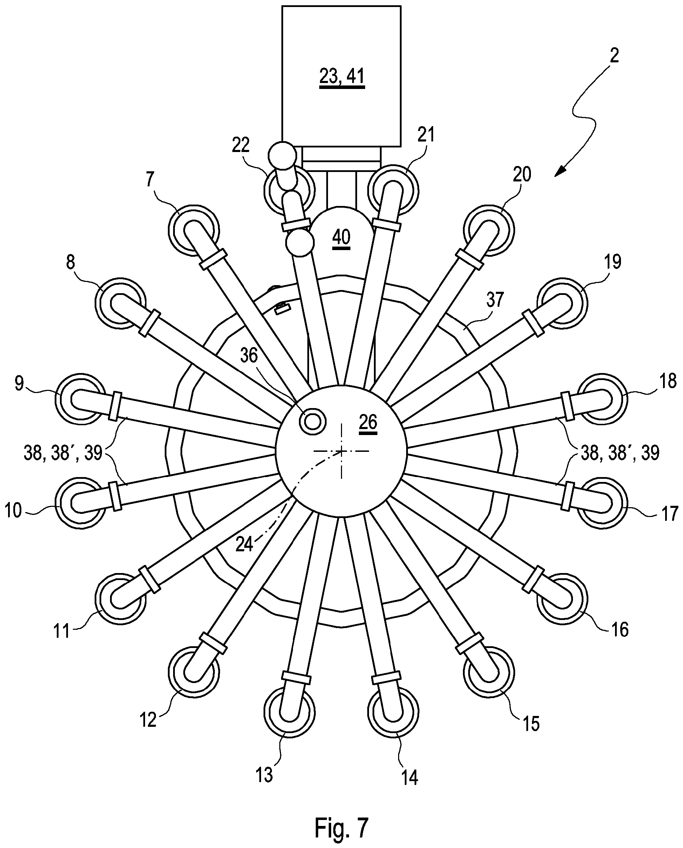

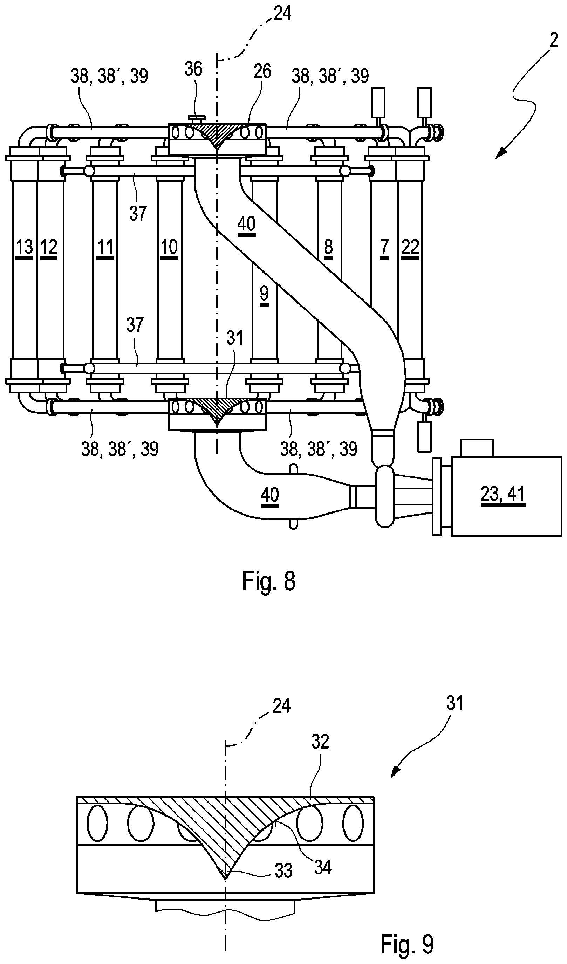

Die Figuren 6 bis 9 illustrieren den Aufbau eines weiteren Querstromfiltrationssystems 2 mit insgesamt sechzehn im Wesentlichen den Hohlfasermodulen 3, 4, 5, 6 des Querstromfiltrationssystems 1 baulich entsprechenden Hohlfasermodulen 7 - 22 sowie Verbindungsabschnitten 38. Insbesondere die Draufsicht der Figur 7 lässt dabei ein durch ein Hohlprofil gebildetes Rack 37 erkennen, welches sechzehn Hohlfasermodule 7 - 22 in hexadekagonaler Anordnung und achsparalleler Orientierung stabilisiert. Neben einem dem in Figur 5 gezeigten Strömungsteiler 25 des Querstromfiltrationssystems 1 baugleichen Strömungsteiler 26 mit analogem Entlüfter 36 umfasst das Querstromfiltrationssystem 2 einen entsprechenden Strömungssammler 31, dessen Einzelheiten Figur 9 zu entnehmen sind. Kernbestandteil des Strömungssammlers 31 bildet demnach ein zweiter Rotationskörper 32, dessen umlaufende zweite Mantelfläche 34 durch die Hohlfasermodule 7 - 22 isogonal angeströmt wird und die auftreffende Suspension in Verlängerung der durch die konkave Formgebung der zweiten Mantelfläche 34 gebildeten zweiten Spitze 33 einer lediglich in den Figuren 6, 7 und 8 gezeigten Umwälzpumpe 23 zuleitet.

Die Umwälzpumpe 23 ist, wie insbesondere in Figur 8 zu erkennen ist, durch jeweils eine Verbindungsleitung 40 fluidisch mit dem Strömungsteiler 26 und dem Strömungssammler 31 verbunden. Dabei ist die Umwälzpumpe 23 derart ausgestaltet, dass sie die Suspension im Querstromfiltrationssystem 2 zirkuliert. Das heißt insbesondere, dass die vom Strömungssammler 31 aus den Hohlfasermodulen 7 - 22 stammende, gesammelte Suspension anschließend zum Strömungsteiler 26 gefördert wird, wo die Suspension gleichmäßig auf die Hohlfasermodule 7 - 22 verteilt wird. Anschließend gelangt die Suspension wieder zum Strömungssammler 31. Die Umwälzpumpe 23 ist also insbesondere als Zirkulationspumpe 41 ausgestaltet. Dabei kann die Zirkulation der Suspension mehrfach wiederholt werden, um eine erwünschte Filtration der Suspension zu erreichen.

In den Figuren 6 und 7 ist ferner erkennbar, dass die Hohlfasermodule 7 - 22 drehsymmetrisch um die Längsachse 24 angeordnet sind. Hierbei beträgt der Symmetriewinkel in etwa 22,5°. Entsprechendes gilt für die Verbindungsabschnitte 38 zum Verbinden der Hohlfasermodule 7 - 22 mit dem Strömungsverteiler 26 bzw. dem Strömungsammer 31. Hieraus ergibt sich ferner, dass die Hohlfasermodule 7 - 22 radial äquidistant zur Längsachse 24 angeordnet sind.

Ein Rack 37 ist auch der in den Figuren 1 bis 4 gezeigten Beispiels zu sehen. Auch hier dient das Rack 37 der Stabilisierung bzw. Halterung der achsparallel angeordneten Hohlfasermodule 3 - 6.

Das jeweilige Querstromfiltrationssystem 1,2 ist vorteilhaft ein abgeschlossenes System, das autonom zur Filtration von Suspension einsetzbar ist.

Die Hohlfasermodule 3 - 22 werden von der Suspension parallel durchströmt. Zudem erfolgt die Strömung der Hohlfasermodule 3 - 22 in die gleiche Richtung, und zwar vom Strömungsteiler 25 in Richtung des Strömungssammlers 30. Hierdurch wird die Suspension bei der Filtration möglichst wenig umgelenkt, was eine schonende Filtration der Suspension zur Folge hat.

Bei der Filteration einer Suspension, insbesondere von Wein, wird durch die mindestens drei im Wesentlichen zylindrische Hohlfasermodule 3 - 22 ein Retentat der Suspension zurückhalten, wobei die Umwälzpumpe 23 eine mechanische Strömung der Suspension erzeugt. Der Strömungsteiler 25, 26 verteilt dabei die Suspension auf die Hohlfasermodule 3 - 22, während der Strömungssammler 30, 31 die Suspension von den Hohlfasermodulen 3 - 22 sammelt. Der Strömungsteiler 25, 26 und der Strömungssammler 30, 31 sind fluidisch mit der Umwälzpumpe 23 und den Hohlfasermodulen 3 - 22 verbunden und im Wesentlichen mittig auf der Längsachse 24 des Querstromfiltrationssystems 1, 2 angeordnet sind. Dabei durchströmt die Suspension die Hohlfasermodule 3 - 22 parallel zu der Längsachse 24 durchströmt.

Bevorzugt werden dabei die aus den Hohlfasermodulen 3 - 22 stammenden Strömungen im Strömungssammler 30, 31 gesammelt. Das heißt, dass durch den Strömungssammler 30, 31 keine Einbringen der Strömung in die Hohlfasermodule 3 - 22 erfolgt. Mit anderes Worten, der Strömungssammler 30, 31 dient dem Zweck, die aus den Hohlfasermodulen 3 - 22 strömende Suspension zu sammeln und weiterzuleiten. Eine Verteilung oder Teilung der Supension auf die Hohlfasermodule 3 - 22 erfolgt durch den Strömungsteiler 25, 26. Dabei ist der Strömungsteiler 25, 26 vorteilhaft derart ausgestaltet, dass diese Teilung homogen erfolgt, so dass die Hohlfasermodule 3 - 22 jeweils vom gleichen Anteil der Suspension durchströmt werden.

Auch der Strömungssammler 30, 31 ist bevorzugt derart ausgestaltet, dass er die von den Hohlfasermodulen 7 - 22 stammende Suspension gleichmäßig sammelt.

Auch hierdurch wird eine homogene, hierarchiefreie Strömung der Suspension durch das Querstromfiltrationssystem 1, 2 erreicht. Dabei kann insbesondere vorgesehen sein, dass die Strömungssammler 30, 31 und der Strömungsteiler 25, 26 als Gleichteile ausgebildet sind.

## Patentansprüche

1. Querstromfiltrationssystem (1, 2) zum Filtrieren einer Suspension, insbesondere eines Weins, mit
- mindestens drei im Wesentlichen zylindrischen Hohlfasermodulen (3 - 22) zum Zurückhalten eines Retentats der Suspension,
- einer mit den Hohlfasermodulen (3 - 22) fluidisch verbundenen Umwälzpumpe (23) zum Erzeugen einer mechanischen Strömung der Suspension,
- einem Strömungsteiler (25, 26) zum Verteilen der Suspension auf die Hohlfasermodule (3 - 22) und
- einem Strömungssammler (30, 31) zum Sammeln der Suspension von den Hohlfasermodulen (3 - 22),
wobei der Strömungsteiler (25, 26) und der Strömungssammler (30, 31) mit der Umwälzpumpe (23) und den Hohlfasermodulen (3 - 22) fluidisch verbunden und im Wesentlichen mittig auf einer Längsachse (24) des Querstromfiltrationssystems (1, 2) angeordnet sind,
- wobei die Hohlfasermodule (3 - 22) achsparallel um die Längsachse (24) angeordnet sind,
**dadurch gekennzeichnet,**
**dass** wenigstens zwei der Hohlfasermodule (3 - 22) jeweils durch einen Verbindungsabschnitt (38) fluidisch mit dem Strömungsteiler (25, 26) verbunden sind, wobei wenigstens zwei der Verbindungsabschnitte (38) als Gleichteile (39) ausgebildet sind, und/oder
**dass** wenigstens zwei der Querfasermodule (3 - 22) jeweils durch einen Verbindungsabschnitt (38) fluidisch mit dem Strömungssammler (30, 31) verbunden sind, wobei wenigstens zwei der Verbindungsabschnitte (38) als Gleichteile (39) ausgebildet sind.

2. Querstromfiltrationssystem nach Anspruch 1,
**dadurch gekennzeichnet,**
**dass** der Strömungsteiler (25, 26) einen ersten Rotationskörper (27) mit einer ersten Spitze (28) und einer ersten umlaufenden Mantelfläche (29) umfasst, derart angeordnet, dass der Strömungsteiler (25, 26) die Suspension im Wesentlichen gleichmäßig auf die Hohlfasermodule (3 - 22) verteilt, wenn die Umwälzpumpe (23) die Strömung auf die erste Spitze (28) richtet.

3. Querstromfiltrationssystem nach Anspruch 2,
**dadurch gekennzeichnet,**
**dass** die erste Mantelfläche (29) konkav ist.

4. Querstromfiltrationssystem nach Anspruch 2,
**dadurch gekennzeichnet,**
**dass** der erste Rotationskörper (27) konisch, insbesondere ein gerader Kreiskegel ist.

5. Querstromfiltrationssystem nach Anspruch 3 oder 4,
**dadurch gekennzeichnet,**
**dass** der erste Rotationskörper (27) gleichmäßig um die erste Spitze (28) angeordnete Vertiefungen der ersten Mantelfläche (29) zum Leiten der Suspension entlang der ersten Mantelfläche (29) aufweist.

6. Querstromfiltrationssystem nach einem der Ansprüche 1 bis 5,
**dadurch gekennzeichnet,**
**dass** der Strömungssammler (30, 31) einen zweiten Rotationskörper (32) mit einer zweiten Spitze (33) und einer zweiten umlaufenden Mantelfläche (34) umfasst, derart angeordnet, dass der Strömungssammler (30) die Suspension der Umwälzpumpe (23) zuführt, wenn die Hohlfasermodule (3 - 22) die Strömung auf die zweite Mantelfläche (34) richten.

7. Querstromfiltrationssystem nach Anspruch 6,
**dadurch gekennzeichnet,**
**dass** die zweite Mantelfläche (34) konkav ist.

8. Querstromfiltrationssystem (1, 2) nach Anspruch 6,
**dadurch gekennzeichnet,**
**dass** der zweite Rotationskörper (32) konisch, insbesondere ein gerader Kreiskegel ist.

9. Querstromfiltrationssystem nach Anspruch 7 oder 8,
**dadurch gekennzeichnet,**
**dass** der zweite Rotationskörper (32) gleichmäßig um die zweite Spitze (33) angeordnete Vertiefungen der zweiten Mantelfläche (34) zum Leiten der Suspension entlang der zweiten Mantelfläche (34) aufweist.

10. Querstromfiltrationssystem nach einem der Ansprüche 1 bis 9, **gekennzeichnet durch**
einen mit den Hohlfasermodulen (3 - 22) und der Umwälzpumpe (23) fluidisch verbundenen Entlüfter (35, 36) zum Entlüften des Querstromfiltrationssystems (1, 2).

11. Querstromfiltrationssystem nach einem der Ansprüche 1 bis 10, **gekennzeichnet durch**
mindestens ein mit den Hohlfasermodulen (3 - 22) und der Umwälzpumpe (23) mechanisch verbundenes Rack (37) zum Halten der Hohlfasermodule (3 - 22).

12. Querstromfiltrationssystem nach Anspruch 11,
**gekennzeichnet durch**
mehrere Racks (37), wobei jedes Rack (37) aus einem oder mehreren Hohlfasermodulen (7 - 22) bestehen kann.

13. Querstromfiltrationssystem nach einem der Ansprüche 1 bis 12,
**dadurch gekennzeichnet,**
**dass** die Querfasermodule (3 - 22) äquidistant zur Längsachse (24) angeordnet sind.

14. Querstromfiltrationssystem nach einem der Ansprüche 1 bis 13,
**dadurch gekennzeichnet,**
**dass** die Querfasermodule (3 - 22) drehsymmetrisch um die Längsachse (24) angeordnet sind.

15. Querstromfiltrationssystem nach einem der Ansprüche 1 bis 14,
**dadurch gekennzeichnet,**
**dass** die Verbindungsabschnitte (38) drehsymmetrisch um die Längsachse (24) angeordnet sind.

## Claims

1. Cross-flow filtration system (1, 2) for filtering a suspension, in particular a wine, having
- at least three substantially cylindrical hollow fibre modules (3 - 22) for retaining a retentate of the suspension,
- a circulation pump (23) fluidly connected to the hollow fibre modules (3 - 22) for generating a mechanical flow of the suspension,
- a flow divider (25, 26) for distributing the suspension onto the hollow fibre modules (3 -22) and
- a flow collector (30, 31) for collecting the suspension from the hollow fibre modules (3 - 22),
wherein the flow divider (25, 26) and the flow collector (30, 31) are fluidly connected to the circulation pump (23) and the hollow fibre modules (3 - 22) and are arranged substantially centrally on a longitudinal axis (24) of the cross-flow filtration system (1, 2),
- wherein the hollow fibre modules (3 - 22) are arranged axially parallel around the longitudinal axis (24),
**characterised in that**
at least two of the hollow fibre modules (3 - 22) are fluidly connected to the flow divider (25, 26) by a connecting section (38) respectively, wherein at least two of the connecting sections (38) are formed as identical parts (39), and/or
at least two of the cross-fibre modules (3 - 22) are fluidly connected to the flow collector (30, 31) by a connecting section (38) respectively, wherein at least two of the connecting sections (38) are formed as identical parts (39).

2. Cross-flow filtration system according to claim 1,
**characterised in that**
the flow divider (25, 26) comprises a first rotation body (27) having a first tip (28) and a first circumferential shell surface (29), arranged in such a way that the flow divider (25, 26) distributes the suspension substantially evenly onto the hollow fibre modules (3 - 22) if the circulation pump (23) directs the flow onto the first tip (28).

3. Cross-flow filtration system according to claim 2,
**characterised in that**
the first shell surface (29) is concave.

4. Cross-flow filtration system according to claim 2,
**characterised in that**
the first rotation body (27) is conical, in particular a straight circular cone.

5. Cross-flow filtration system according to claim 3 or 4,
**characterised in that**
the first rotation body (27) has indentations of the first shell surface (29) arranged evenly around the first tip (28) for guiding the suspension along the first shell surface (29).

6. Cross-flow filtration system according to any one of claims 1 to 5,
**characterised in that**
the flow collector (30, 31) comprises a second rotation body (32) having a second tip (33) and a second circumferential shell surface (34), arranged in such a way that the flow collector (30) supplies the suspension to the circulation pump (23) if the hollow fibre modules (3 - 22) direct the flow onto the second shell surface (34).

7. Cross-flow filtration system according to claim 6,
**characterised in that**
the second shell surface (34) is concave.

8. Cross-flow filtration system (1, 2) according to claim 6,
**characterised in that**
the second rotation body (32) is conical, in particular a straight circular cone.

9. Cross-flow filtration system according to claim 7 or 8,
**characterised in that**
the second rotation body (32) has indentations of the second shell surface (34) arranged evenly around the second tip (33) for guiding the suspension along the second shell surface (34).

10. Cross-flow filtration system according to any one of claims 1 to 9,
**characterised by**
a deaerator (35, 36) fluidly connected to the hollow fibre modules (3 - 22) and the circulation pump (23) for deaerating the cross-flow filtration system (1, 2).

11. Cross-flow filtration system according to any one of claims 1 to 10,
**characterised by**
at least one rack (37) mechanically connected to the hollow fibre modules (3 - 22) and the circulation pump (23) for holding the hollow fibre modules (3 - 22).

12. Cross-flow filtration system according to claim 11,
**characterised by**
several racks (37), wherein each rack (37) can consist of one or more hollow fibre modules (7 - 22).

13. Cross-flow filtration system according to any one of claims 1 to 12,
**characterised in that**
the cross-fibre modules (3 - 22) are arranged equidistantly to the longitudinal axis (24).

14. Cross-flow filtration system according to any one of claims 1 to 13,
**characterised in that**
the cross-fibre modules (3 - 22) are arranged to be rotationally symmetrical around the longitudinal axis (24).

15. Cross-flow filtration system according to any one of claims 1 to 14,
**characterised in that**
the connecting sections (38) are arranged to be rotationally symmetrical around the longitudinal axis (24).

## Revendications

1. Système de filtration à courant transversal (1, 2) pour la filtration d'une suspension, en particulier d'un vin, avec
- au moins trois modules à fibres creuses (3-22) sensiblement cylindriques pour la retenue d'un rétentat de la suspension,
- une pompe de recirculation (23) raccordée fluidiquement aux modules à fibres creuses (3-22) pour la génération d'un courant mécanique de la suspension,
- un diviseur de courant (25, 26) pour la répartition de la suspension sur les modules à fibres creuses (3-22) et
- un collecteur de courant (30, 31) pour la collecte de la suspension des modules à fibres creuses (3-22),
dans lequel le diviseur de courant (25, 26) et le collecteur de courant (30, 31) sont raccordés fluidiquement à la pompe de recirculation (23) et aux modules à fibres creuses (3-22) et sont agencés sensiblement au milieu sur un axe longitudinal (24) du système de filtration à courant transversal (1, 2),
- dans lequel les modules à fibres creuses (3-22) sont agencés de manière parallèle à l'axe autour de l'axe longitudinal (24),
**caractérisé en ce que**
au moins deux des modules à fibres creuses (3-22) sont raccordés respectivement par une section de raccordement (38) fluidiquement au diviseur de courant (25 26), dans lequel au moins deux des sections de raccordement (38) sont réalisées comme des parties identiques (39), et/ou
au moins deux des modules à fibres creuses (3-22) sont raccordés respectivement par une section de raccordement (38) fluidiquement au collecteur de courant (30, 31), dans lequel au moins deux des sections de raccordement (38) sont réalisées comme des parties identiques (39).

2. Système de filtration à courant transversal selon la revendication 1,
**caractérisé en ce que**
le diviseur de courant (25, 26) comporte un premier corps de rotation (27) avec une première pointe (28) et une première surface d'enveloppe tournante (29) de telle manière que le diviseur de courant (25, 26) répartisse la suspension sensiblement uniformément sur les modules à fibres creuses (3-22), lorsque la pompe de recirculation (23) dirige le courant sur la première pointe (28).

3. Système de filtration à courant transversal selon la revendication 2,
**caractérisé en ce que**
la première surface d'enveloppe (29) est concave.

4. Système de filtration à courant transversal selon la revendication 2,
**caractérisé en ce que**
le premier corps de rotation (27) est conique, en particulier est un cône circulaire droit.

5. Système de filtration à courant transversal selon la revendication 3 ou 4,
**caractérisé en ce que**
le premier corps de rotation (27) présente des cavités agencées uniformément autour de la première pointe (28) de la première surface d'enveloppe (29) pour le guidage de la suspension le long de la première surface d'enveloppe (29).

6. Système de filtration à courant transversal selon l'une quelconque des revendications 1 à 5,
**caractérisé en ce que**
le collecteur de courant (30, 31) comporte un second corps de rotation (32) avec une seconde pointe (33) et une seconde surface d'enveloppe tournante (34),
agencé de telle manière que le collecteur de courant (30) amène la suspension à la pompe de recirculation (23), lorsque les modules à fibres creuses (3-22) dirigent le courant sur la seconde surface d'enveloppe (34).

7. Système de filtration à courant transversal selon la revendication 6,
**caractérisé en ce que**
la seconde surface d'enveloppe (34) est concave.

8. Système de filtration à courant transversal (1, 2) selon la revendication 6,
**caractérisé en ce que**
le second corps de rotation (32) est conique, en particulier est un cône circulaire droit.

9. Système de filtration à courant transversal selon la revendication 7 ou 8,
**caractérisé en ce que**
le second corps de rotation (32) présente des cavités agencées uniformément autour de la seconde pointe (33) de la seconde surface d'enveloppe (34) pour le guidage de la suspension le long de la seconde surface d'enveloppe (34).

10. Système de filtration à courant transversal selon l'une quelconque des revendications 1 à 9,
**caractérisé par**
un ventilateur (35, 36) raccordé fluidiquement aux modules à fibres creuses (3-22) et à la pompe de recirculation (23) pour la ventilation du système de filtration à courant transversal (1, 2).

11. Système de filtration à courant transversal selon l'une quelconque des revendications 1 à 10,
**caractérisé par**
au moins un châssis (37) raccordé mécaniquement aux modules à fibres creuses (3-22) et à la pompe de recirculation (23) pour le maintien des modules à fibres creuses (3-22).

12. Système de filtration à courant transversal selon la revendication 11,
**caractérisé par**
plusieurs châssis (37), dans lequel chaque châssis (37) peut se composer d'un ou de plusieurs modules à fibres creuses (7-22).

13. Système de filtration à courant transversal selon l'une quelconque des revendications 1 à 12,
**caractérisé en ce que**
les modules à fibres transversales (3-22) sont agencés à équidistance de l'axe longitudinal (24).

14. Système de filtration à courant transversal selon l'une quelconque des revendications 1 à 13,
**caractérisé en ce que**
les modules à fibres transversales (3-22) sont agencés de manière symétrique en rotation autour de l'axe longitudinal (24).

15. Système de filtration à courant transversal selon l'une quelconque des revendications 1 à 14,
**caractérisé en ce que**
les sections de raccordement (38) sont agencées de manière symétrique en rotation autour de l'axe longitudinal (24).
